## Europäisches Patentamt
## European Patent Office
## Office européen des brevets

(11) Veröffentlichungsnummer : **0 307 417 B1**

(12) **EUROPÄISCHE PATENTSCHRIFT**

(45) Veröffentlichungstag der Patentschrift :
**18.03.92 Patentblatt 92/12**

(21) Anmeldenummer : **88900037.8**

(22) Anmeldetag : **10.12.87**

(86) Internationale Anmeldenummer :
**PCT/HU87/00056**

(87) Internationale Veröffentlichungsnummer :
**WO 88/07623 06.10.88 Gazette 88/22**

(51) Int. Cl.⁵ : **F02B 53/00,** F01C 1/356

(54) **ROTATIONSKOLBENMASCHINE.**

(30) Priorität : **25.03.87 HU 130687**

(43) Veröffentlichungstag der Anmeldung :
**22.03.89 Patentblatt 89/12**

(45) Bekanntmachung des Hinweises auf die
Patenterteilung :
**18.03.92 Patentblatt 92/12**

(84) Benannte Vertragsstaaten :
**AT BE CH DE FR GB IT LI LU NL SE**

(56) Entgegenhaltungen :
**EP-A- 0 187 165**
**AT-B- 137 171**

(56) Entgegenhaltungen :
**CH-A- 84 811**
**CH-A- 129 980**
**CH-A- 181 046**
**FR-A- 1 383 752**

(73) Patentinhaber : **MADAY, Laszlo**
**Kléh Istvan ut 2/b**
**H-1126 Budapest (HU)**

(72) Erfinder : **MADAY, Laszlo**
**Kléh Istvan ut 2/b**
**H-1126 Budapest (HU)**

(74) Vertreter : **Patentanwälte Viering & Jentschura**
**Steinsdorfstrasse 6 Postfach 22 14 43**
**W-8000 München 22 (DE)**

EP 0 307 417 B1

## Beschreibung

Die Erfindung betrifft eine Rotationskolbenmaschine, insbesondere einen Verbrennungsmotor, mit einem Zylinder, der einen mit einem Einlaßkanal und einem Auslaßkanal versehenen und kreisförmig ausgebildeten Innenraum aufweist, in dem der Drehkolben zu der Hauptwelle koaxial gelagert und mit dieser mitdrehbar angeordnet ist, wobei zwischen dem Einlaßkanal und dem Auslaßkanal mindestens ein Dämmventil eingebaut ist, welches in seiner geschlossenen Stellung den Innenraum des Zylinders abdichtend in wenigstens zwei Räume unterteilt, jedoch in seiner offenen Stellung den Durchgang des Drehkolbens ermöglicht, wobei der Einlaßkanal mit einer ein Medium (z.B. die Brennluft bzw. das Gasgemisch) mit Kompressionsenddruck in einen Aufladungsabschnitt hinter dem Drehkolben aufladenden Einheit, vorzugsweise einem Kompressor, verbunden ist.

Wie bekannt, versuchen Erfinder schon seit langem einen solchen volumverdrängenden Verbrennungsmotor zu schaffen, bei dem anstatt der linearen alternierenden Kolbenbewegung eine Drehbewegung stattfindet. In der Praxis sind eine Reihe solcher Drehkolbenmaschinen bzw. Kreiskolbenmotoren bekannt geworden, doch kann unter diesen als relativ verbreitet nur der "WANKEL-Motor" betrachtet werden. (Siehe z.B.: Dr. ÁBRAHÁM : "Handbuch des Strassenverkehrs", Technischer Buchverlag, Budapest, 1978, Seite 745-746.)

Bei dem WANKEL-Motor ist der Kolben ein innenverzahntes Planetenrad, d.h. ein Radkranz. Die Außenkontur dieses Kranzrades ist nicht kreisförmig, sondern ein aus Kreisbogen bestehendes dreieckartiges Gebilde, welches in jeder Richtung den gleichen Durchmesser hat. Wird die Drehkurbel gedreht, so beschreibt der Zahnkranz, d.h. der Drehkolben, Zykloidenbahnen.

Der obige Rotationskolbenmotor ist zwar in der Bauart viel einfacher ausgestaltet als der herkömmliche Hubkolbenmotor. Trotzdem besteht - nach den bisherigen Erfahrungen - ein ernstes Hindernis für seine Verbreitung in weiterem Umfang darin, daß die Spitzenabdichtung des Kolbens problematisch ist; ferner die Verbindung Zylinder und Kolben, sowie die Motorsteuerung hinsichtlich der konstruktiven Ausgestaltung zu kompliziert und zu teuer ist und deshalb zu großen materiellen Aufwand und eine komplizierte Erzeugungstechnologie erfordert.

Nach der CH-A-84 111 ist eine Rotationskolbenmaschine entsprechend dem Oberbegriff des Anspruchs 1 bekannt, wobei eine jeweils gleichbleibende Gasmenge in den Brennraum eingepreßt werden soll und das Gasgemisch immer zu dem gleichen Zeitpunkt in einer einzigen vorbestimmten Stellung des Kolbens gezündet werden soll. Diese Voraussetzungen führen dazu, daß ein solcher Motor höchstens bei stationären Kraftmaschinen angewendet werden kann.

Durch die Erfindung wird die Aufgabe gelöst, eine Rotationskolbenmaschine der eingangs erwähnten Art zu schaffen, bei der die Menge und der Druck des in dem Aufladungsabschnitt eingepreßten Kraftstoffes ohne Konstruktionsänderungen in weiten Grenzen verändert werden kann.

Dies wird erfindungsgemäß durch die Merkmale aus dem kennzeichnenden Teil des Anspruchs 1 erreicht.

Durch die Merkmale aus dem Anspruch 2 wird eine Rotationskolbenmaschine geschaffen, welche mit einem einzigen Zylinder teils als Kreiskolbenmotor, teils als Kompressor wirksam ist.

Eine weitere bevorzugte Ausführungsform der erfindungsgemäßen Rotationskolbenmaschine wird durch die Merkmale aus dem Anspruch 3 erreicht.

Das Dämmventil kann als ein radial verschiebbar gelagerter Schieber ausgestaltet sein. Das Dämmventil kann aber auch als eine solche drehbare Scheibe ausgestaltet werden, welche zur Drehebene des Drehkolbens normal, zu dieser in Querrichtung angeordnet ist. Diese drehbare Scheibe ist wenigstens mit einer solchen Öffnung versehen, die den Drehkolben durchzulassen vermag. Ferner ist die Scheibe mit einem solchen Drehantrieb verbunden, der je nach dem Rotieren des Drehkolbens gesteuert wird.

Die Erfindung wird nun anhand der beigefügten Zeichnungen näher erläutert. In der Zeichnung zeigt:
Fig. 1 - einen Schnitt eines Rotationskolbenmotors,
Fig. 2 - einen Querschnitt der Ausführungsform nach Fig. 1 in verhältnismäßig kleinerem Maßstab,
Fig. 3 - eine Ausführungsform der Rotationskolbenmaschine gemäß der Erfindung, im Schnitt, und
Fig. 4 - eine Ausführungsform der Dämmventile.

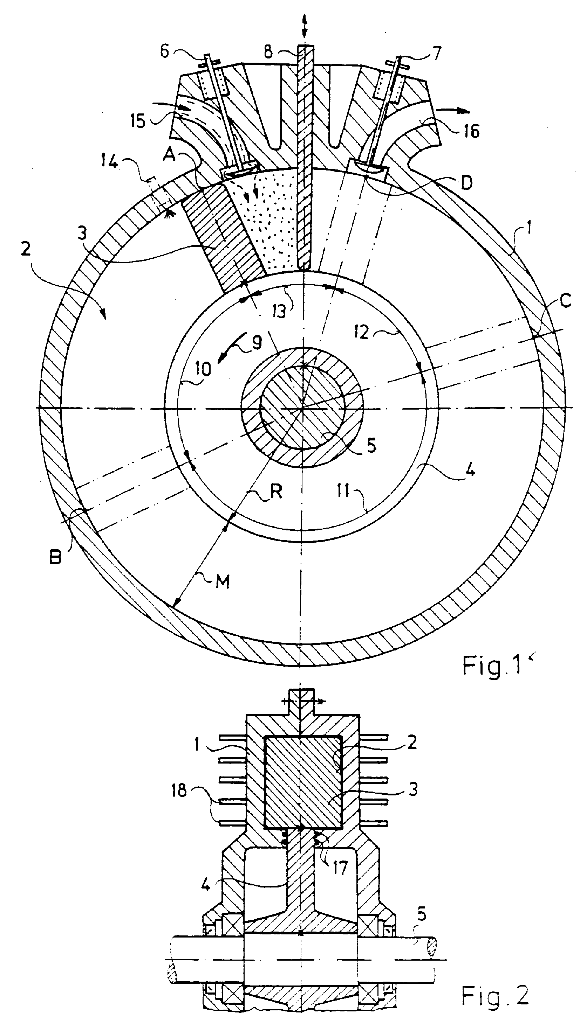

Beim in Fig. 1 dargestellten aufgeladenen Rotationskolbenmotor ist in einem Zylinder 1 ein kreisringförmiger Innenraum 2 ausgebildet, in dem ein Drehkolben 3 abgedichtet rotierbar ist. Der Drehkolben 3 ist in dem dargestellten Falle als radialer Ansatz von quadratisch-prismischem Querschnitt an einer Antriebsscheibe 4 befestigt, welche mit einer koaxial gebetteten Hauptwelle 5 des Motors mitdrehbar angeordnet ist. Die Hauptwelle 5 ist in einem Motorgehäuse in an sich bekannter Weise gelagert und über eine Wellenkupplung an einem Antrieb eines Fahrzeuges angeschlossen (nicht dargestellt).

Der Zylinder 1 ist mit einem Einlaßventil 6 und einem Auslaßventil 7 versehen, welche zum Öffnen, bzw. Schließen des Einlaßkanals 15 bzw. des Auslaßkanals 16 dienen. Zwischen dem Einlaßkanal 15 und dem Auslaßkanal 16 ist zusätzlich ein Dämmventil 8 eingebaut, das in seiner geschlossenen Stellung den Innenraum

2 des Zylinders 1 abdichtend in zwei Räume unterteilt und in seiner offenen Stellung den ganzen Querschnitt des Zylinders 1 freigibt, damit dann der Durchgang des Drehkolbens 3 ermöglicht ist.

Im vorliegenden Falle ist das Dämmventil 8 als ein, in einer längsgerichteten Nut abdichtend drehbarer Schieber ausgestaltet, der aus seiner in Fig. 1 dargestellten geschlossenen Stellung in seine offene Stellung von einem nicht eingezeichneten Steuermechanismus verdreht werden kann. Dieser kann z.B. eine mit einer Steuerfläche der Hauptwelle 5 zusammenarbeitende Steuervorrichtung sein.

Der Rotationskolbenmotor ist in diesem Falle ein aufgeladener Motor, dessen Brennraum über das Einlaßventil 6 mit Verbrennungsluft bei Diesel-Betriebsweise oder mit brennbarem Gasgemisch bei Benzinmotor-Betriebsweise unter Druck so angefüllt wird, daß der Kompressionsenddruckwert in der vorbestimmten Winkelstellung des Drehkolbens 3 erreicht wird. Durch Selbstentzündung des dann zu diesem Zeitpunkt eingespritzten Dieselöls (bei Diesel-Betriebsweise), oder durch die Funkenzündung des brennbaren Benzin-Luft-Gemisches (bei OTTO-Motoren) werden dann die Brennstoffe verbrannt. Die dabei freiwerdende Energie dreht den Drehkolben 3 - samt der Hauptwelle 5 - in der gewünschten Drehrichtung eines Pfeiles 9.

Im vorliegenden Falle gestattet der ringartige Innenraum 2 des Zylinders 1 die volle Umdrehung des Drehkolbens 3 um 360°. Mit dem Bezugszeichen "A" ist in Fig. 1 die Grundstellung des Drehkolbens 3 zu Beginn der Aufladung, mit "B" aber jene Stellung des Drehkolbens 3 bezeichnet, welche dieser im Augenblick der Explosion einnimmt. Ein Bogenabschnitt zwischen "A" und "B" stellt demnach den Aufladungsabschnitt 10 des Innenraumes 2 dar. Ferner bezeichnet das Bezugszeichen "C" die Drehkolbenstellung beim Ende des Arbeitstaktes. Zwischen den Stellungen "C" und "B" liegt ein bogenartiger Arbeitstaktabschnitt 11. Schließlich bezeichnet "D" die Stellung des Drehkolbens 3 am Ende des Auspufftaktes, d.h. zwischen den Stellungen "C" und "D" befindet sich ein Auspuffabschnitt 12 des Innenraumes 2. Zwischen den Stellungen "D" und "A" liegt der Überleitungsabschnitt 13.

Bei unseren Versuchen wurde der Radius "R" der Antriebsscheibe 4 mit 100 mm, seine Höhe "M" aber mit 50 mm, ferner bei der Ausführung nach Fig. 1 der Aufladungsabschnitt 10 des Innenraumes 2 mit 90°, der Arbeitstaktabschnitt 11 mit 180°, der Auspuffabschnitt 12 mit 60°, der Überleitungsabschnitt 13 aber mit 30° gewählt.

Der Zylinder 1 ist im Aufladungsabschnitt 10 mit einer solchen Einheit 14 versehen, welche in an sich bekannter Weise bei Diesel-Betriebsweise eine Kraftstoff-Einspritzdüse, bei Benzinmotor-Betriebsweise eine elektrische Zündkerze ist.

Aus Fig. 2 ist ersichtlich, daß der Zylinder 1 und der mit ihm zusammengebaute Motorblock im vorliegenden Falle geteilt ausgeführt ist, ferner der Drehkolben 3 unten in an sich bekannter Weise mit Dichtungsringen 17 abgedichtet ist, welche an den Stirnflächen der Antriebsscheibe 4 beidseitig aufliegen Falls erforderlich, kann der Zylinder 1 an seinem Außenmantel mit Kühlrippen 18 versehen werden.

Der aufgeladene Rotationskolben-Verbrennungsmotor nach Fig. 1 arbeitet wie folgt:

In der Stellung "A" des Drehkolbens 3 ist das Einlaßventil 6 offen, wohingegen das Dämmventil 8 in seiner geschlossenen Stellung ist. Nun wird über den Einlaßkanal 15 z.B. für Dieselbetrieb Preßluft in den Aufladungsabschnitt 10 des Innenraumes 2 solange eingepreßt, bis der Drehkolben 3 in die Stellung "B" gelangt. Die Außenverdichtung der Luft wird so gewählt, daß beim Erreichen der Stellung "B" des Drehkolbens 3 der Pressluftdruck den geplanten Kompressionsendwert und die diesem entsprechende Temperatur erreicht. Hierauf wird durch die Einheit 14 (hier: durch die Einspritzdüse) das in den Raum 2 eingespritzte Gasöl durch Selbstzündung verbrannt. Zu bemerken ist, daß in Betrieb im Aufladungsabschnitt 10 das Zylindervolumen zwischen der hinteren Stirnfläche des Drehkolbens 3 und dem Dämmventil 8 immer weiter zunimmt. Trotzdem muß mit der Erhöhung der Außenverdichtung der nötige Betriebsdruck und die Temperatur für das Brennen gesichert werden. Damit also weicht die Betriebsweise dieses Verbrennungsmotors von dem als klassisch zu betrachtenden thermodynamischen Diesel-Kreisprozeß ab. Durch das Regeln der Aufladung kann die spezifische Leistung des Motors in weiten Grenzen geregelt werden.

Die durch das Brennen bewirkte Expansion dreht den Drehkolben 3 in der Richtung des Pfeiles 9. Währenddessen verrichtet noch der Drehkolben 3 die entsprechenden Fortbewegungen im Arbeitstaktabschnitt 11. Der Auspuffabschnitt 12 wird im vorliegenden Falle von der Stellung "C" des Drehkolbens 3 gerechnet, während bei offener Stellung des Auslaßventils 7 die vor den Drehkolben 3 im Raum 2 befindlichen Gase über den Auslaßkanal 16 aus dem Zylinderraum herausgeschoben werden. (Wir bemerken, daß gegebenenfalls das Auslaßventil 7 weggelassen werden kann.)

Wenn der Drehkolben 3 in die Stellung "D" gelangt, wird der Auspufftakt beendet, und es folgt danach der Überleitungsabschnitt 13. Nach dem Durchlauf in dem Überleitungsabschnitt 13 befindet sich der Drehkolben 3 wieder in seiner Ausgangsstellung "A" und der obige Kreisprozeß wird zyklisch wiederholt. Gegebenenfalls kann das Einlaßventil 6 schon vor Erreichen der Stellung "A" des Drehkolbens 3 etwas geöffnet werden.

Ähnlich arbeitet der Verbrennungsmotor, wenn er in der OTTO-Betriebsweise zum Einsatz kommt. Ein Unterschied besteht dann nur insofern, daß ein Benzin-Luftgemisch von vorher festgelegtem Druck mit Hilfe einer an sich bekannten Gemischbildungsvorrichtung (z.B. mit einem Vergaser) über den Einlaßkanal 15 in den Innenraum 2 des Zylinders 1 geleitet wird. Ferner ist die Einheit 14 in diesem Falle eine elektrische Zündkerze. Das Einlaßventil 6 läßt in den Innenraum 2 des Zylinders 1 durch den Einlaßkanal 16 das (auf den Verbrennungsenddruck mit Außenverdichtung komprimierte und dadurch im vorgeschriebenen Ausmaß erwärmte) Gemisch gelangen. Diese Außenverdichtung, d.h. die Aufladung des Zylinderraumes auf den-Verbrennungsdruck kann mit jedem an sich bekannten Kompressor (z.B. einem ROOTS-Kompressor) erfolgen. Der Aufladungsdruck ist jeweils von der gewählten Betriebsmethode und der Art des Brennstoffes abhängig.

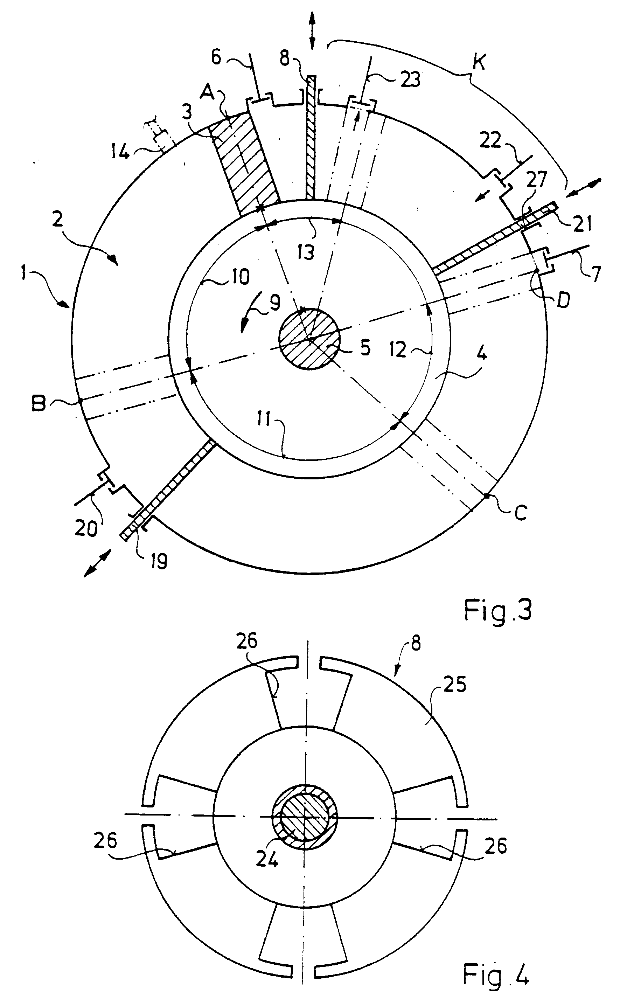

In Fig. 3 wird eine Ausführungsform der Erfindung dargestellt, wobei der Rotationskolbenmotor mit einem Kompressor kombiniert ist.

Diese erfindungsgemäße Ausführungsform stimmt hinsichtlich der grundlegenden Ausführung des Verbrennungsmotors mit der Ausführungsform nach Fig. 1 und Fig. 2 überein. Auch hier ist das Einlaßventil 6 zu finden, wie auch das Auslaßventil 7 und das zwischen die beiden eingebaute Dämmventil 8. Der Aufladungsabschnitt 10 ist hier mit 90°, der Arbeitstaktabschnitt 11 mit 120°, der Auspuffabschnitt 12 aber mit 60° gewählt.

In dem Arbeitstaktabschnitt 11 ist der Zylinder 1 mit einem weiteren Dämmventil 19 versehen, das mit dem Dämmventil 8 identisch ausgestaltet und gesteuert werden kann. Vor diesem ist (in der Rotierungsrichtung des Drehkolbens 3 gesehen) der Zylinder 1 mit einem Regulierventil 20 versehen, durch welches von dem Zylinderraum vor dem Drehkolben 3 der Aufladungsdruck vorteilhaft reguliert werden kann. Dies kann insbesondere dann von Vorteil sein, wenn über das Einlaßventil 6 der Aufladungsdruck nur in engen Grenzen durch den Kompressor geregelt werden kann.

Eine Eigenart des Rotationskolbenmotors gemäß der Erfindung besteht ferner darin, daß der Aufladungsabschnitt 10 im kreisringartigen Innenraum 2 des Zylinders 1 beliebig verlängert oder verkürzt werden kann. Dadurch kann je nach dem jeweiligen Leistungsbedarf die Größe des Brennraumes bei einem Motor in weiten Grenzen verändert werden. Dies besagt mit anderen Worten, daß das Volumen des Brennraumes eines Motors von bereits gewählter Größe in weiten Grenzen verändert werden kann, wozu nur der Anfang der Stellung "B" des Drehkolbens 3 entlang des Umfangs durch entsprechende Steuerung der Ventile versetzt werden muß.

Nach dem Auslaßventil 7 ist der Zylinder 1 mit einem dritten Dämmventil 21 versehen. (Dieses kann im vorliegenden Falle hinsichtlich der konstruktiven Ausgestaltung und der Steuerung mit dem Dämmventil 8 identisch ausgebildet sein.)

Der von den Dämmventilen 21 und 8 begrenzte Zylinderraum arbeitet - in Zusammenwirkung mit dem Drehkolben 3 - als Kompressor "K". Zu diesem Zweck ist der Zylinder 1 zusätzlich mit einem Einlaufventil 22 und einem Auslaufventil 23 ausgestattet. Der Kompressor "K" kann gegebenenfalls auch an sich dazu ausreichen, um den Aufladungsdruck des Kreiskolbenmotors zu erzeugen. Der Kompressor "K" kann ferner die Preßluft beispielsweise in einen Druckspeicher (nicht dargestellt) oder zu anderen Zwecken weitergeben.

Über das Regulierventil 20 kann mit der von der Spülungsseite her vor den Drehkolben 3 eingeleiteten Preßluft der Aufladungsdruck im Aufladungsabschnitt 10 reguliert werden. Diese Preßluft kann zugleich auch den Drehkolben 3 und den Zylinder 1 wirksam abkühlen. Ferner verbessert sie auch die Zusammensetzung des im Zylinderrraum befindlichen Auspuffgases, d.h. die Qualität der flüchtigen ausgestoßenen Motorgase (Auspuffgase).

Den bei der ersten Ausführungsform erwähnten Überleitungsabschnitt 13 legt hier der Drehkolben 3, beginnend mit dem Schließen des Auslaufventils 23 bis zur Grundstellung "A" zurück.

In Fig. 4 geben wir ein Beispiel, wie die Dämmventile 8, 19 und 21 vorteilhaft ausgeführt werden können. Wie es hier in etwas verkleinertem Maßstab dargestellt wurde, kann das Dämmventil als eine, um eine Welle 24 drehbare Scheibe 25 ausgestaltet werden, welche zum Hindurchlassen des Drehkolbens 3 wenigstens mit einer Durchlaßöffnung 26 versehen ist. Die Scheibe 25 greift in den Zylinder 1 radial und auf die Ebene des ringförmigen Innenraumes 2 normal so ein, daß sie in einer Nut 27 des Zylinders 1 abdichtend um die außerhalb des Innenraumes gebettete Welle 24 rotieren kann. Die Welle 24 steht mit einem (nicht eingezeichneten) Drehantrieb, vorzugsweise mit einem an sich bekannten Taktantrieb in Verbindung, welcher je nach der jeweiligen Stellung des Drehkolbens 3 die Scheibe 25 entweder in eine solche Stellung verdreht, daß der Durchgang des Drehkolbens 3 durch die Durchlaßöffnung 26 der Scheibe 25 ermöglicht ist oder die Scheibe 25 in eine solche Stellung fördert, daß die Scheibe den Innenraum 2 des Zylinders gasdicht unterteilt. Mit dieser Ausführungsform kann ein geräuschloses und verhältnismäßig einfaches Arbeiten und Steuern der Dämmventile 8, 19, 21 erzielt werden. Selbstredend muß die Steuerung so ausgestaltet werden, daß die Dämmventile 8, 19 und 21 entsprechend der oben beschriebenen Betriebsweise öffnen und schließen.

Zwar haben wir im obigen nur für den Verbrennungsmotor ein Beispiel gebracht, doch kann die Rotationskolbenmaschine gemäß der Erfindung gegebenenfalls auch als Pumpe oder als Kompressor vorteilhaft zum Einsatz kommen. Ferner ist auch eine solche Ausführung möglich, bei welcher das Dämmventil oder die Dämmventile (z.B. einer Druckfeder entgegen) durch eine als Steuerbahn ausgebildete Stirnseite des Drehkolbens 3 geöffnet wird bzw. werden.

Einer der wichtigsten Vorteile der beschriebenen Ausführungsformen besteht darin, daß der Rotor gut ausbalanciert werden kann, wodurch man selbst in hohen Drehzahlbereichen einen ruhigen und vibrationsfreien Gang (Lauf) der Maschine erzielen kann. Weiterhin ist es auch vorteilhaft, daß der Zylinder und der Rotor hinsichtlich ihrer konstruktiven Ausgestaltung überaus einfach sind und deshalb mit einem relativ kleinen Aufwand gebaut werden können. Die bei den herkömmlichen Motoren bisher unbedingt notwendigen Kurbeltriebe (Kurbelwelle, Plenelstangen usw.) können hier wegbleiben. Damit wird die Konstruktion und die Betriebssicherheit der Rotationskolbenmaschine noch weiter vereinfacht bzw. verbessert. Zwar braucht das Zustandebringen des Anfülldruckes einen zusätzlichen Aufwand, da der Druck bei den gegenwärtig angewandten aufgeladenen Motoren vorzufinden ist. Dies wird aber dadurch ausgeglichen, daß die Betriebsparameter, nämlich die Qualität der Mischung, der Aufladungsenddruck und die Temperatur genauer beherrscht werden können, wodurch bei den Verbrennungsmotoren eine vollständigere Verbrennung, eine bessere spezifische Leistung und eine umweltfreundlichere Gasemission erzielt werden können. Da die Drehzahl beliebig erhöht werden kann (sogar in einen Bereich über 10.000 n/min), kann die Leistung des Verbrennungsmotors gemäß der Erfindung im Vergleich zu den bekannten Lösungen bedeutend erhöht werden. Der Verbrennungsmotor kann nicht nur mit Gasöl oder Benzin, sondern auch mit jedem anderen brennbaren Gasgemisch betrieben werden. Durch die koaxiale Anordnung der Hauptwelle 5 ist die Belastung der Hauptwellenlager wesentlich günstiger als bei den herkömmlichen Motoren. Demzufolge ist der Verbrennungsmotor gemäß der Erfindung auch in der Betriebssicherheit und der Lebensdauer den bekannten Otto-Motor-Typen überlegen.

## LISTE DER BEZUGSZEICHEN

1 - Zylinder
2 - kreisförmiger Innenraum
3 - Drehkolben
4 - Antriebsscheibe
5 - Hauptwelle
6 - Einlaßventil
7 - Auslaßventil
8 - Dämmventil
9 - Pfeil
10 - Aufladungsabschnitt
11 - Arbeitstaktabschnitt
12 - Auspuffabschnitt
13 - Überleitungsabschnitt
14 - Einheit
15 - Einlaßkanal
16 - Auslaßkanal '
17 - Dichtungsringe
18 - Kühlrippen
19 - Dämmventil
20 - Regulierventil
21 - Dämmventil
22 - Einlaufventil
23 - Auslaufventil
24 - Welle
25 - Scheibe
26 - Durchlaßöffnung
27 - Nut
R - Radius der Antriebsscheibe
M - Höhe
K - Kompressor
A - Stellung des Drehkolbens
B - Stellung des Drehkolbens
C - Stellung des Drehkolbens
D - Stellung des Drehkolbens

**Patentansprüche**

1. Rotationskolbenmaschine, insbesondere Verbrennungsmotor, mit einem Zylinder (1), der einen mit einem Einlaßkanal (15) und einem Auslaßkanal (16) versehenen und kreisförmig ausgebildeten Innenraum (2) aufweist, in dem der Drehkolben (3) zu der Hauptwelle (5) koaxial gelagert und mit dieser mitdrehbar angeordnet ist, wobei zwischen dem Einlaßkanal (15) und dem Auslaßkanal (16) mindestens ein Dämmventil (8) eingebaut ist, welches in seiner geschlossenen Stellung den Innenraum (2) des Zylinders (1) abdichtend in wenigstens zwei Räume unterteilt, jedoch in seiner offenen Stellung den Durchgang des Drehkolbens (3) ermöglicht, dadurch gekennzeichnet, daß der Einlaßkanal (15) mit einer ein Medium (z.B. die Brennluft bzw. das Gemisch) mit Kompressions-Enddruck in einen Aufladungsabschnitt (10) hinter dem Drehkolben (3) aufladenden Einheit, vorzugsweise einem Kompressor, verbunden ist und daß der Zylinder in seinem Arbeitstaktabschnitt (11) mit einem Regulierventil (20) zum Regulieren des Aufladungsdruckes von der Spülungsseite her vor dem Drehkolben (3) und dadurch der Stellung (B) des Drehkolbens (3),in welcher der Kompression-Enddruck im Aufladungsabschnitt (10) zu gewährleisten ist, versehen ist.

2. Rotationskolbenmaschine nach Anspruch 1, dadurch gekennzeichnet, daß zwischen dem ersten Dämmventil (8) und dem Auslaßkanal (16) ein zusätzliches Dämmventil (21) eingebaut ist, wobei ein Teil des kreisringförmigen Innenraumes (2) des Zylinders (1) zwischen den Dämmventilen (8, 21) als Arbeitsraum eines Rompressors (K) ausgebildet ist, welcher mit einem Einlaufventil (22) und einem Auslaufventil (23) versehen ist, wobei der mit diesem Kompressorarbeitsraum ebenfalls zusammenwirkende Drehkolben (3) in diesem beschnitt als Rotor des Kompressors (K) arbeitet (Fig.3).

3. Rotationskolbenmaschine nach Anspruch 2, dadurch gekennzeichnet, daß der Druckstutzen des im gemeinsamen Zylinder (1) arbeitenden Kompressors (K) an den Einlaßkanal (15) des Verbrennungsmotors angeschlossen ist.

**Claims**

1. Rotary piston machine, in particular an internal combustion engine, having a cylinder (1) which comprises an inner chamber (2) which is provided with an inlet duct (15) and an outlet duct (16), is formed in a circular manner, and in which the rotary piston (3) is mounted coaxially relative to the main shaft (5) and is disposed so as to be co-rotational therewith, wherein between the inlet duct (15) and the outlet duct (16) there is mounted at least one stop valve (8) which in its closed position divides the inner chamber (2) of the cylinder (1) in a leaktight manner into at least two chambers but in its open position enables the rotary piston (3) to pass through, characterised in that the inlet duct (15) is connected to a unit, preferably a compressor, which charges a medium (for example the combustion air or the mixture) at the compression end pressure, into a charging section (10) behind the rotary piston (3); and in that the cylinder in its working stroke section (11) is provided with a regulating valve (20) for regulating the charging pressure from the scavenging side in front of the rotary piston (3) and thus the position (B) of the rotary piston (3) in which the compression end pressure in the charging section (10) is to be ensured.

2. Rotary piston machine according to Claim 1, characterised in that an additional stop valve (21) is mounted between the first stop valve (8) and the outlet duct (16), part of the circular ring-shaped inner chamber (2) of the cylinder (1) being formed between the stop valves (8, 21) as the operating chamber of a compressor (K) which is provided with an intake valve (22) and a discharge valve (23), the rotary piston (3) which also cooperates with this compressor operating chamber operating in this section as a rotor of the compressor (K) (Figure 3).

3. Rotary piston machine according to Claim 2, characterised in that the pressure connection of the compressor (K) operating in the common cylinder (1) is connected to the inlet duct (15) of the internal combustion engine.

**Revendications**

1. Machine à piston rotatif, notamment un moteur à combustion, comportant un cylindre (1) définissant une chambre interne circulaire (2) pourvue d'un canal d'admission (15) et d'un canal d'échappement (16) et renfermant le piston rotatif (3) coaxial à l'arbre principal (5) et solidaire en rotation de celui-ci, cependant qu'il est prévu, entre le canal d'admission (15) et le canal d'échappement (16), au moins une valve de séparation (8) qui, dans sa position fermée, divise la chambre (2) du cylindre (1) de manière étanche en au moins deux enceintes et, dans sa position "ouverte", permet le passage du piston rotatif (3), caractérisée en ce que le canal d'admission (15) est relié à une unité de suralimentation, de préférence un compresseur, qui refoule un fluide (par exemple l'air de combustion au le mélange) sous la pression finale de compression dans une section de suralimentation (10) derrière le piston rotatif (3), et en ce que le cylindre comporte, dans sa section de travail (11) une soupape de réglage (20) assurant le réglage de la pression de suralimentation, venant du côté de balayage, devant le piston rotatif (3), et assurant de ce fait le réglage de la position (B) du piston rotatif (3) pour laquelle la pression finale de compression doit être assurée dans la section de suralimentation (10).

2. Machine à piston rotatif selon la revendication 1, caractérisée en ce qu'il est prévu, entre la première valve de séparation (8) et le canal d'échappaient (16), une valve de séparation additionnelle (21), cependant qu'une partie de la chambre interne annulaire (2) du cylindre (1) comprise entre les valves de séparation (8, 21) constitue une chambre de travail d'un compresseur (K) pourvu d'une soupape d'entrée (22) et d'une soupape de sortie (23), tandis que le piston rotatif (3) coopérant également avec cette chambre de travail du compresseur fait fonction de rotor du compresseur (K) dans cette section (figure 3).

3. Machine à piston rotatif selon la revendication 2, caractérisée en ce que le raccord de refoulement du compresseur (K) fonctionnant dans le cylindre commun (1) est relié au canal d'admission (15) du moteur à combustion.

Fig.1

Fig.2

EP 0 307 417 B1

Fig. 3

Fig. 4